(19) **Europäisches Patentamt / European Patent Office / Office européen des brevets**

(11) **EP 4 582 299 A1**

(12) **EUROPEAN PATENT APPLICATION**
published in accordance with Art. 153(4) EPC

(43) Date of publication:
09.07.2025 Bulletin 2025/28

(21) Application number: 23858972.5

(22) Date of filing: 19.07.2023

(51) International Patent Classification (IPC):
*B60L 53/22* $^{(2019.01)}$     *H02M 7/06* $^{(2006.01)}$
*H02M 3/335* $^{(2006.01)}$

(52) Cooperative Patent Classification (CPC):
**B60L 53/00; B60L 53/10; B60L 53/20; B60L 53/22;**
**H02J 7/00; H02J 7/04; H02M 1/088; H02M 1/42;**
**H02M 3/00; H02M 3/335; H02M 7/06;**
**H02M 7/5387; Y02T 10/70**

(86) International application number:
**PCT/CN2023/108248**

(87) International publication number:
**WO 2024/045936 (07.03.2024 Gazette 2024/10)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: 30.08.2022  CN 202211059072

(71) Applicant: **BYD Company Limited**
**Shenzhen, Guangdong 518118 (CN)**

(72) Inventors:
• WANG, Xinghui
  Shenzhen, Guangdong 518118 (CN)
• WANG, Chao
  Shenzhen, Guangdong 518118 (CN)
• LIU, Weidong
  Shenzhen, Guangdong 518118 (CN)

(74) Representative: **Mathys & Squire**
**The Shard**
**32 London Bridge Street**
**London SE1 9SG (GB)**

(54) **CHARGER CONTROL METHOD AND APPARATUS, CHARGER, AND VEHICLE**

(57)     A charger control method and apparatus, a charger, and a vehicle. The method is applied to a charger, the charger is an on-board charger or a charging pile charger, and the method comprises: determining a target working mode of an LLC circuit according to a first voltage of a battery, the target working mode being a full-bridge mode or a half-bridge mode; and controlling the LLC circuit to work according to the target working mode. According to the method, dynamic switching of the working mode of the LLC circuit can be achieved according to the voltage of the battery, avoiding generating uncontrollable rectified current, so that the charger works safely, stably, and reliably in various working conditions, and the control mode is simple and efficient.

FIG. 3

*Determine a target working mode of an LLC circuit according to a first voltage of a battery* — S301

*Control the LLC circuit to work according to the target working mode* — S302

EP 4 582 299 A1

**Description**

CROSS-REFERENCE TO RELATED APPLICATIONS

The present disclosure claims priority to and benefits of Chinese Patent Application No. 202211059072.4, entitled "CHARGER CONTROL METHOD AND APPARATUS, CHARGER AND VEHICLE" and filed on August 30, 2022. The entire content of the above-referenced application is incorporated herein by reference.

FIELD

The present disclosure relates to the field of vehicle technologies, and specifically, to a charger control method and apparatus, a charger, and a vehicle.

BACKGROUND

A charger is an electronic device converting an alternating current into a direct current and is used as a charging device of an electric vehicle to supply power to a battery. A two-stage topological structure is usually used in existing chargers, where a pre-stage circuit is a power factor correction circuit, and a post-stage circuit is an isolated DCDC circuit (that is, an LCC circuit (resonant circuit)), and an instantaneous power difference between an alternating-current side and a direct-current side is balanced through a bus capacitor between the two-stage circuits.

At present, in a working process of the charger, the upper and lower bridge arms of bridge arms of the isolated DCDC circuit are turned on complementarily, to supply power to the battery of the vehicle. However, when a voltage on the alternating-current side of the charger is high but a voltage of the battery is low, an uncontrollable rectified current is generated, leading to a risk in the charger.

SUMMARY

To overcome problems existing in the related art, the present disclosure provides a charger control method and apparatus, a charger, and a vehicle.

To achieve the foregoing objectives, according to a first aspect, the present disclosure provides a charger control method. The method is applied to a charger, the charger is an on-board charger or a charging pile charger, the charger includes an LLC circuit, and the LLC circuit is connected to a battery. The method includes:

determining a target working mode of the LLC circuit according to a first voltage of the battery, where the target working mode is a full-bridge mode or a half-bridge mode; and
controlling the LLC circuit to work according to the target working mode.

Optionally, the determining a target working mode of the LLC circuit according to a first voltage includes:

if the first voltage is less than a first preset voltage, determining the target working mode as the half-bridge mode; and
if the first voltage is greater than or equal to the first preset voltage, determining the target working mode as the full-bridge mode.

Optionally, the LLC circuit includes an inverter circuit, a resonant circuit, and a rectifier circuit that are connected sequentially, where the inverter circuit includes a first-phase bridge arm and a second-phase bridge arm; and
the controlling the LLC circuit to work according to the target working mode includes:

if the target working mode is the half-bridge mode, controlling an upper bridge arm and a lower bridge arm of the first-phase bridge arm to turn on complementarily through a first duty cycle, and controlling an upper bridge arm of the second-phase bridge arm to turn off and a lower bridge arm of the second-phase bridge arm to turn on; and
if the target working mode is the full-bridge mode, controlling the upper bridge arm and the lower bridge arm of the first-phase bridge arm to turn on complementarily through the first duty cycle, and controlling the upper bridge arm and the lower bridge arm of the second-phase bridge arm to turn on complementarily through the first duty cycle, where the upper bridge arm of the first-phase bridge arm and the lower bridge arm of the second-phase bridge arm are turned on simultaneously, and the lower bridge arm of the first-phase bridge arm and the upper bridge arm of the second-phase bridge arm are turned on simultaneously.

Optionally, the charger further includes a bus capacitor, a first bus end of the first-phase bridge arm and the second-phase bridge arm is connected to an end of the bus capacitor, and a second bus end of the first-phase bridge arm and the second-phase bridge arm is connected to another end of the bus capacitor; and
in a case that the target working mode is the full-bridge mode, before the step of controlling the upper bridge arm and the lower bridge arm of the first-phase bridge arm to turn on complementarily through the first duty cycle, the controlling the LLC circuit to work according to the target working mode further includes:

obtaining a second voltage of the bus capacitor; and
if the second voltage is less than a second preset voltage, performing the step of controlling the upper bridge arm and the lower bridge arm of the first-phase bridge arm to turn on complementarily through the first duty cycle, where a ratio of the second preset voltage to the first preset voltage is equal to a turn ratio of a transformer in the resonant circuit.

Optionally, the controlling the LLC circuit to work according to the target working mode further includes:
if the second voltage is greater than or equal to the second preset voltage, controlling the upper bridge arm and the lower bridge arm of the first-phase bridge arm to turn on complementarily through a second duty cycle, and controlling the upper bridge arm and the lower bridge arm of the second-phase bridge arm to turn on complementarily through the second duty cycle, where the upper bridge arm of the first-phase bridge arm and the lower bridge arm of the second-phase bridge arm are turned on simultaneously, the lower bridge arm of the first-phase bridge arm and the upper bridge arm of the second-phase bridge arm are turned on simultaneously, and the second duty cycle is less than the first duty cycle.

Optionally, the charger further includes a power factor correction circuit and the bus capacitor, where the power factor correction circuit is connected to the LLC circuit through the bus capacitor; and
the method further includes:

> obtaining current electricity information of an alternating-current side of the charger and the second voltage of the bus capacitor, where the electricity information includes a current current and a current voltage on the alternating-current side;
> determining a steady-state target current on the alternating-current side;
> determining a target current value on the alternating-current side according to the current voltage and the steady-state target current; and
> controlling, according to the target current value, the current current, the current voltage, and the second voltage, the power factor correction circuit to perform power factor correction.

Optionally, the determining a steady-state target current on the alternating-current side includes:

> determining a target charging power on the alternating-current side; and
> determining the steady-state target current on the alternating-current side according to the target charging power.

According to a second aspect, the present disclosure provides a charger control apparatus. The charger control apparatus includes:

> a memory, having a computer program stored therein; and
> a controller, the controller, when executing the computer program, implementing the steps of the charger control method according to the first aspect of the present disclosure.

According to a third aspect, the present disclosure provides a charger. The charger includes a power factor correction circuit, a bus capacitor, and an LLC circuit that are connected sequentially. The charger further includes:
the charger control apparatus according to the second aspect of the present disclosure, where the charger control apparatus is connected to both the power factor correction circuit and the LLC circuit.

According to a fourth aspect, the present disclosure provides a vehicle, including a battery and the charger according to the third aspect of the present disclosure.

In the foregoing technical solutions, the target working mode of the LLC circuit may be determined according to the voltage of the battery, and the LLC circuit is further controlled to work according to the target working mode. The target working mode is a full-bridge mode or a half-bridge mode. Therefore, dynamic switching of the working mode of the LLC circuit can be achieved according to the voltage of the battery, avoiding generation of an uncontrollable rectified current, so that the charger works safely, stably, and reliably in various working conditions, and a control mode is simple and efficient.

Other features and advantages of the present disclosure will be described in detail in the following specific implementations.

BRIEF DESCRIPTION OF THE DRAWINGS

The accompanying drawings are provided to further understand the present disclosure, and they constitute a part of the specification. The accompanying drawings, along with the specific implementations, are used to explain the present disclosure, and constitute no limitation on the present disclosure. In the accompanying drawings:

> FIG. 1 is a structural block diagram of a charger according to an exemplary embodiment.
> FIG. 2 is a diagram of a circuit topology structure of a charger according to an exemplary embodiment.
> FIG. 3 is a flowchart of a charger control method according to an exemplary embodiment.
> FIG. 4 is a schematic diagram of a method for controlling a power factor correction circuit in a charger according to an exemplary embodiment.

DETAILED DESCRIPTION

The following describes the specific implementations of the present disclosure in detail with reference to the accompanying drawings. It should be understood that the specific implementations described herein are merely used to describe and explain the present disclosure, but are not intended to limit the present disclosure.

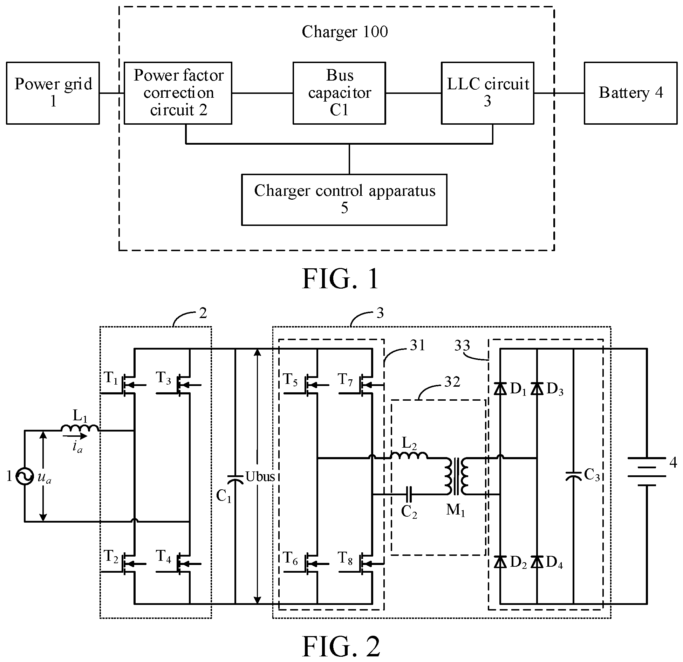

The present disclosure provides a charger. The charger may be an on-board charger or a charging pile charger, and the charging pile charger and the on-board charger may adopt a same circuit topology structure (as shown in FIG. 2). As shown in FIG. 1, the charger 100 includes a charger control apparatus 5, and a power factor correction circuit 2, a bus capacitor C1, and an LLC circuit 3 that are connected sequentially. The power factor correction circuit 2 is connected to a power grid 1, the LLC circuit 3 is configured to be connected to a battery 4, and the bus capacitor C1 may be an electrolytic capacitor, a film capacitor, a ceramic capacitor, or the like and configured to filter a direct current voltage.

The charger control apparatus 5 is connected to both the power factor correction circuit 2 and the LLC circuit 3, and is configured to perform a charger control method applied to the charger, to control the power factor correction circuit 2 and the LLC circuit 3 to work, so as to charge the battery. The power factor correction circuit 2 is configured to perform power factor correction on an input signal of the power grid and output a current signal obtained through the power factor correction; and the LLC circuit 3 is configured to perform direct current conversion on the current signal obtained through the power factor correction, to obtain a direct current so as to charge the battery of a vehicle.

As shown in FIG. 2, the power factor correction circuit 2 may include: a third-phase bridge arm formed by a first switch tube T1 and a second switch tube T2, and a fourth-phase bridge arm formed by a third switch tube T3 and a fourth switch tube T4, where a midpoint of the third-phase bridge arm is connected to a positive electrode of the power grid 1 through an inductor L1, and a midpoint of the fourth-phase bridge arm is connected to a negative electrode of the power grid 1; and a third bus end of the third-phase bridge arm and the fourth-phase bridge arm is connected to an end of the bus capacitor C1, and a fourth bus end of the third-phase bridge arm and the fourth-phase bridge arm is connected to another end of the bus capacitor C1.

A current voltage on an alternating-current side of the charger is $u_a$, a current current on the alternating-current side of the charger is $i_a$, and a voltage between two ends of the bus capacitor C1 is Ubus (that is, a second voltage).

As shown in FIG. 2, the LLC circuit 3 includes an inverter circuit 31, a resonant circuit 32, and a rectifier circuit 33 that are connected sequentially.

The inverter circuit 31 includes: a first-phase bridge arm formed by a fifth switch tube T5 and a sixth switch tube T6, and a second-phase bridge arm formed by a seventh switch tube T7 and an eighth switch tube T8, where a first bus end of the first-phase bridge arm and the second-phase bridge arm is connected to the end of the bus capacitor C1 and the third bus end, and a second bus end of the first-phase bridge arm and the second-phase bridge arm is connected to the another end of the bus capacitor C1 and the fourth bus end.

The resonant circuit 32 adopts an LLC resonant cavity, and includes a resonant inductor L2, a resonant capacitor C2, and a transformer M1. An end of the resonant inductor L2 is connected to a midpoint of the first-phase bridge arm, and another end is connected to a first input end on a primary side of the transformer M1, where the resonant inductor L2 may be magnetically integrated with the transformer M1 to participate in resonance in the resonant circuit. An end of the resonant capacitor C2 is connected to a midpoint of the second-phase bridge arm, and another end is connected to a second input end on the primary side of the transformer M1, where the resonant capacitor C2 may be a film capacitor or a ceramic capacitor, to prevent a direct-current offset of the transformer M1 and participate in resonance in the resonant circuit. The transformer M1 may be a tapped transformer and configured for electric energy isolation transmission.

The rectifier circuit 33 includes a fifth-phase bridge arm formed by a first diode D1 and a second diode D2, a sixth-phase bridge arm formed by a third diode D3 and a fourth diode D4, and a filter capacitor C3. A midpoint of the fifth-phase bridge arm is connected to a first input end on a secondary side of the transformer M1, and a midpoint of the sixth-phase bridge arm is connected to a second input end on the secondary side of the transformer M1. A fifth bus end of the fifth-phase bridge arm and the sixth-phase bridge arm is connected to an end of the filter capacitor C3 and the positive electrode of the battery 4, and a sixth bus end of the fifth-phase bridge arm and the sixth-phase bridge arm is connected to another end of the filter capacitor C3 and the negative electrode of the battery 4. The filter capacitor C3 is a capacitor on a battery side and is configured to filter a direct current voltage on the battery side.

In addition, it should be noted that, the rectifier circuit 33 may use a switch tube device or a rectifier diode (as shown in FIG. 2) to implement electric energy transmission.

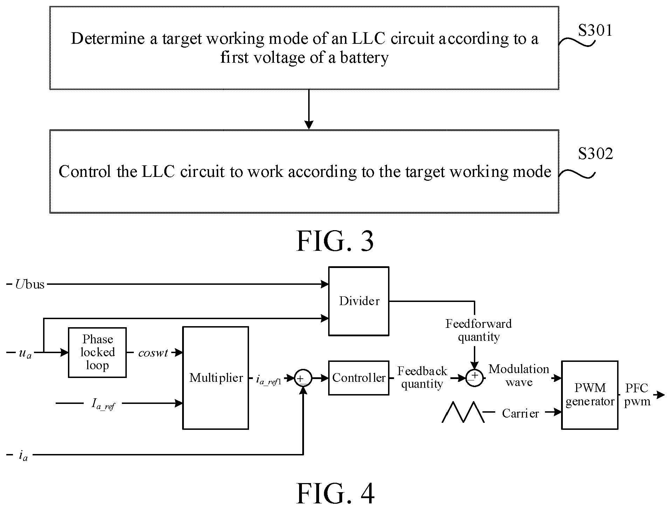

The following describes the charger control method applied to the charger in detail. As shown in FIG. 3, the method may include S301 and S302.

S301. A target working mode of an LLC circuit is determined according to a first voltage of a battery.

In the present disclosure, the first voltage of the battery is a voltage between two ends of the battery and is a voltage on a direct-current side. The first voltage may be obtained through sampling by using a voltage sensor, or may be obtained in a vehicle packet communication manner.

The target working mode is a full-bridge mode or a half-bridge mode.

S302. The LLC circuit is controlled to work according to the target working mode.

In the foregoing technical solutions, the target working mode of the LLC circuit may be determined according to the voltage of the battery, and the LLC circuit is further controlled to work according to the target working mode. The target working mode is a full-bridge mode or a half-bridge mode. Therefore, dynamic switching of the working mode of the LLC circuit can be achieved according to the voltage of the battery, avoiding generation of an uncontrollable rectified current, so that the charger works safely, stably, and reliably in various working conditions, and a control mode is simple and efficient.

The following describes in detail a specific implementation of determining the target working mode of the LLC circuit according to the first voltage of the battery in S301.

Specifically, if the first voltage is less than a first preset voltage, the target working mode is determined as the half-bridge mode; and if the first voltage is greater than or equal to the first preset voltage, the target working mode is determined as the full-bridge mode.

As can be known according to a circuit principle of the circuit topology shown in FIG. 2, to ensure that the charger works in a safe range, it needs to be ensured that a voltage between two ends of the bus capacitor C1 (that is, the second voltage) meets

$$Ubus \geq \sqrt{2} * UacMax$$

, otherwise, an uncontrollable rectified current will be generated, where $UacMax$ is a maximum working voltage on the alternating-current side of the charger. Therefore, it can be deduced that, when the first voltage of the battery is less than

$$\sqrt{2} * UacMax \big/ K$$

, the LLC circuit works in the full-bridge mode, and an uncontrollable rectified current is generated, leading to existence of a risk in the charger.

Therefore, the first preset voltage may be set to

$$\sqrt{2} * UacMax \big/ K$$

. That is, when the first voltage of the battery is less than $\sqrt{2} * UacMax \big/ K$, the LLC circuit works in the half-bridge mode, implementing a characteristic of a half-bridge LLC; and when the first voltage of the battery is greater than or equal to

$$\sqrt{2} * UacMax \big/ K$$

, the LLC circuit works in the full-bridge mode, implementing a characteristic of a full-bridge LLC, where K is a turn ratio of the transformer in the resonant circuit (that is, a ratio of turns on the primary side to turns on the secondary side in the transformer).

When the first voltage of the battery changes from being greater than or equal to

$$\sqrt{2} * UacMax \big/ K$$

to being less than

$$\sqrt{2} * UacMax \big/ K$$

, the working mode of the LLC circuit is switched from the full-bridge mode to the half-bridge mode, that is, a characteristic of the LLC circuit changes. In this case, an input and output characteristic changes to a relationship of 2:1, that is, Ubus=2*K*Udc.

In this way, when the working mode of the LLC circuit is switched from the full-bridge mode to the half-bridge mode, Ubus is far greater than $\sqrt{2} * UacMax$, so that a risk of an uncontrollable rectified current in the charger when a voltage on the alternating-current side is high can be eliminated. Udc is the first voltage of the battery.

The following describes in detail a specific implementation of controlling the LLC circuit to work according to the target working mode in S302.

Specifically, if the target working mode is the half-bridge mode, an upper bridge arm and a lower bridge arm of the first-phase bridge arm are controlled to turn on complementarily through a first duty cycle, and an upper bridge arm of the second-phase bridge arm is controlled to turn off and a lower bridge arm of the second-phase bridge arm is controlled to turn on; and if the target working mode is the full-bridge mode, the upper bridge arm and the lower bridge arm of the first-phase bridge arm are controlled to turn on complementarily through the first duty cycle, and the upper bridge arm and the lower bridge arm of the second-phase bridge arm are controlled to turn on complementarily through the first duty cycle, where the upper bridge arm of the first-phase bridge arm and the lower bridge arm of the second-phase bridge arm are turned on simultaneously, and the lower bridge arm of the first-phase bridge arm and the upper bridge arm of the second-phase bridge arm are turned on simultaneously.

For example, the LLC circuit is shown in FIG. 2. In this case, if the target working mode is the half-bridge mode, the fifth switch tube T5 and the sixth switch tube T6 are controlled to turn on complementarily through the first duty cycle, the seventh switch tube T7 is controlled to turn off continuously, and the eighth switch tube T8 is controlled to turn on continuously; and if the target working mode is the full-bridge mode, the fifth switch tube T5 and the sixth switch tube T6 are controlled to turn on complementarily through the first duty cycle, and the seventh switch tube T7 and the eighth switch tube T8 are controlled to turn on complementarily through the first duty cycle, where the fifth switch tube T5 and the eighth switch tube T8 are turned on simultaneously, and the sixth switch tube T6 and the seventh switch tube T7 are turned on simultaneously.

In addition, according to abnormality analysis, the working mode of the LLC circuit is distinguished by using the first preset voltage as a critical point. Therefore, it can be deduced that, the voltages Ubus between the two ends of the bus capacitor C1 in the two working modes (that is, the full-bridge mode and the half-bridge mode) are greatly different, where in the half-bridge mode, Ubus=2*K*Udc, and in the full-bridge mode, Ubus=K*Udc. In this way, when the LLC circuit is switched from the half-bridge mode to the full-bridge mode, an input voltage (that is, Ubus) of the LLC circuit is excessively high, leading to generation of an extremely large current in the resonant cavity, and the charger has a risk of being damaged. For the same on time, a higher input voltage of the LLC circuit indicates a larger current flowing through the resonant circuit.

To avoid the generation of a large current in the resonant cavity when the LLC circuit is switched from the half-bridge mode to the full-bridge mode, the following method is proposed:

To ensure that the charger works in a safe range, it needs to be ensured that the voltage between the two ends of the bus capacitor C1 meets

$$Ubus \geq \sqrt{2} * UacMax$$

, otherwise, an uncontrollable rectified current will be generated. That is, whether an uncontrollable rectified current is generated is distinguished by using $\sqrt{2} * UacMax$ (that is, a second preset voltage) as a critical point of the voltage between the two ends of the bus capacitor C1. When working of the LLC circuit in the half-bridge mode ends, that is, when the LLC circuit is switched from the half-bridge mode to the full-bridge mode, a relationship between the voltage Ubus between the two ends of the bus capacitor C1 and the second preset voltage needs to be determined. When Ubus is less than (slightly less than herein) the second preset voltage, the LLC circuit may be directly switched from the half-bridge mode to the full-bridge mode. When Ubus is greater than or equal to the second preset voltage, the LLC circuit is not directly switched from the half-bridge mode to the full-bridge mode. Instead, upper bridge arms and lower bridge arms of phase bridge arms in the inverter circuit are controlled to turn on complementarily through a duty cycle less than the foregoing first duty cycle, to discharge the voltage of the bus capacitor through an open loop, and until Ubus is less than the second preset voltage, the LLC circuit is controlled to work in the full-bridge mode (that is, the upper bridge arm and the lower bridge arm of the first-phase bridge arm are controlled to turn on complementarily through the first duty cycle, and the upper bridge arm and the lower bridge arm of the second-phase bridge arm are controlled to turn on complementarily through the first duty cycle, where the upper bridge arm of the first-phase bridge arm and the lower bridge arm of the second-phase bridge arm are turned on simultaneously, and the lower bridge arm of the first-phase bridge arm and the upper bridge arm of the second-phase bridge arm are turned on simultaneously).

Specifically, in a case that the target working mode is the full-bridge mode, before the step that the upper bridge arm and the lower bridge arm of the first-phase bridge arm are controlled to turn on complementarily through the first duty cycle, that the LLC circuit is controlled to work according to the target working mode (S302) may further include the following steps:

a second voltage of the bus capacitor is obtained;

if the second voltage is less than the second preset voltage, the step that the upper bridge arm and the lower bridge arm of the first-phase bridge arm are controlled to turn on complementarily through the first duty cycle and the upper bridge arm and the lower bridge arm of the second-phase bridge arm are controlled to turn on complementarily through the first duty cycle is performed, where a ratio of the second preset voltage to the first preset voltage is equal to a turn ratio of a transformer in the resonant circuit; and

if the second voltage is greater than or equal to the second preset voltage, the upper bridge arm and the lower bridge arm of the first-phase bridge arm are controlled to turn on complementarily through a second duty cycle, and the upper bridge arm and the lower bridge arm of the second-phase bridge arm are controlled to turn on complementarily through the second duty cycle, where the upper bridge arm of the first-phase bridge arm and the lower bridge arm of the second-phase bridge arm are turned on simultaneously, the lower bridge arm of the first-phase bridge arm and the upper bridge arm of the second-phase bridge arm are turned on simultaneously, and the second duty cycle is less than the first duty cycle. For example, the first duty cycle is 50%, and the second duty cycle is 10%.

In the foregoing implementation, when Ubus is greater than or equal to the second preset voltage, the LLC circuit is not directly switched from the half-bridge mode to the full-bridge mode. Instead, the upper bridge arms and the lower bridge arms of the phase bridge arms in the inverter circuit are controlled to turn on complementarily through the duty cycle less than the foregoing first duty cycle, so that on duty cycles of the upper bridge arms and the lower bridge arms of the phase bridge arms in the inverter circuit are limited, that is, on time of the upper bridge arms and the lower bridge arms of the phase bridge arms in the inverter circuit is reduced. Therefore, a current in the resonant cavity is effectively suppressed, and generation of a large current in the resonant cavity when the LLC circuit is switched from the half-bridge mode to the full-bridge mode is further avoided, thereby improving the safety and stability of the charger.

In addition, the foregoing method may further include the following step (1) to step (4):

(1) Current electricity information of the alternating-current side of the charger and the second voltage of the bus capacitor are obtained.

In the present disclosure, the electricity information includes a current current and a current voltage on the alternating-current side.

For example, the current current on the alternating-current side of the charger may be obtained through a current sensor; and the current voltage on the alternating-current side of the charger and the second voltage of the bus capacitor may be obtained through a voltage sensor. In this way, the current electricity information of the alternating-current side of the charger and the second voltage of the bus capacitor may be clear, to provide a data support for current adjustment on the alternating-current side.

(2) A steady-state target current on the alternating-current side is determined.

**In** the present disclosure, the steady-state target current is a current value corresponding to the alternating-current side of the charger when the charger is in a stable and efficient optimal working state.

(3) A target current value on the alternating-current side is determined according to the current voltage and the steady-state target current.

For example, a phase of an alternating current outputted by the power grid may be extracted according to the current voltage $u_a$ (that is, a voltage of the current outputted by the power grid). For example, a product of the steady-state target current and the phase of the alternating current outputted by the power grid may be determined as the target current value. As shown in FIG. 4, if the steady-state target current is $I_{a\_ref}$, and the phase of the alternating current outputted by the power grid and determined based on a phase locked loop is $cos\ wt$, $I_{a\_ref*}$ cos wt may be determined as the target current value $I_{a\_ref1}$.

(4) A power factor correction circuit is controlled to perform power factor correction according to the target current value, the current current, the current voltage, and the second voltage.

Specifically, as shown in FIG. 4, the second voltage Ubus and the current voltage $u_a$ may be inputted into a divider, to obtain a feedforward quantity $u_a$/Ubus of a closed-loop control result. The target current value $I_{a\_ref1}$ and the current current $i_a$ are inputted into a controller, to obtain a feedback quantity of the closed-loop control result. Then, a difference between the feedforward quantity and the feedback quantity is used as a modulation wave and transmitted to a PWM generator, to obtain a duty cycle of the power factor correction (PFC) circuit, and the current on the alternating-current side may change along with the target current value in a manner of adjusting the duty cycle of the power factor correction circuit, to implement power factor correction.

The following describes in detail a specific implementation of determining the steady-state target current on the alternating-current side in the foregoing step (2). Specifically, the step may be implemented through the following step (21) and step (22):

(21). A target charging power on the alternating-current side is determined.

In the present disclosure, the target charging power is a power on the alternating-current side of the charger when the charger is in a stable and efficient optimal working state. Specifically, a minimum value in a maximum output power of the power grid, a current output power of the power grid, a maximum charging power of the battery allowed by a battery management system, a maximum power allowed by a wire, and a maximum charging power of the charger is determined as the target charging power.

For example, the maximum output power of the power grid and the maximum power allowed by the wire may be determined according to content in the national standard GBT 18487.1-2015; the current output power of the power grid may be determined through a power sensor arranged on the power grid in advance; the maximum charging power of the battery allowed by the battery management system may be determined according to related parameter information of the battery; and the maximum charging power of the charger may be determined according to hardware device selection of the charger, that is, belong to an inherent attribute parameter of the charger. The to-be-selected powers are respectively maximum powers corresponding to the power grid, the battery, the wire, and the charger, and the current output power of the power grid. Therefore, by selecting a minimum value as the target charging power, it may be ensured that during working of the charger, the power grid and the battery connected to the charger and wires connecting various parts are all in a safe working state, thereby reducing a possibility of a damaged electronic element on a related circuit. In addition, the power on the alternating-current side of the charger may be ensured to reach a maximum value while working safety is ensured. Therefore, if the power on the alternating-current side of the charger is the target charging power, the charger may be in the stable and efficient optimal working state.

(22) The steady-state target current on the alternating-current side is determined according to the target charging power.

In the present disclosure, the steady-state target current on the alternating-current side is a current value determined according to the target charging power. The steady-state target current may be determined according to a quotient of the target charging power and a valid value of an alternating-current voltage outputted by the power grid.

In addition, the charger control apparatus 5 may include:

a memory, having a computer program stored therein; and
a controller, the controller, when executing the computer program, implementing the steps of the charger control method according to the present disclosure.

The present disclosure further provides a vehicle, including a battery and the charger according to the present disclosure.

Exemplary implementations of the present disclosure are described in detail above with reference to the accompanying drawings, but the present disclosure is not limited to the specific details in the above implementations. Various simple variations may be made to the technical solutions of the present disclosure within the scope of the technical idea of the present disclosure, and such simple variations shall all fall within the protection scope of the present disclosure.

In addition, it should be noted that, specific technical features described in the foregoing specific implementations may be combined in any appropriate manner without conflict. To avoid unnecessary repetition, various possible combinations are not further described in the present disclosure.

In addition, the various implementations of the present disclosure may be combined arbitrarily without departing from the idea of the present disclosure, and such combinations shall also be considered as the content disclosed in the present disclosure.

**Claims**

1. A charger control method, applied to a charger, the charger being an on-board charger or a charging pile charger, the charger comprising an LLC circuit, the LLC circuit being connected to a battery, and the method comprising:

   determining a target working mode of the LLC circuit according to a first voltage of the battery, wherein the target working mode is a full-bridge mode or a half-bridge mode; and
   controlling the LLC circuit to work according to the target working mode.

2. The method according to claim 1, wherein determining the target working mode of the LLC circuit according to the first voltage comprises:

   if the first voltage is less than a first preset voltage, determining the target working mode as the half-bridge mode; and
   if the first voltage is greater than or equal to the first preset voltage, determining the target working mode as the full-bridge mode.

3. The method according to claim 1 or 2, wherein the LLC circuit comprises an inverter circuit, a resonant circuit, and a rectifier circuit that are connected sequentially, wherein the inverter circuit comprises a first-phase bridge arm and a second-phase bridge arm; and
   controlling the LLC circuit to work according to the target working mode comprises:

   if the target working mode is the half-bridge mode, controlling an upper bridge arm and a lower bridge arm of the first-phase bridge arm to turn on complementarily through a first duty cycle, and controlling an upper bridge arm of the second-phase bridge arm to turn off and a lower bridge arm of the second-phase bridge arm to turn on; and
   if the target working mode is the full-bridge mode, controlling the upper bridge arm and the lower bridge arm of the first-phase bridge arm to turn on complementarily through the first duty cycle, and controlling the upper bridge arm and the lower bridge arm of the second-phase bridge arm to turn on complementarily through the first duty cycle, wherein the upper bridge arm of the first-phase bridge arm and the lower bridge arm of the second-phase bridge arm are turned on simultaneously, and the lower bridge arm of the first-phase bridge arm and the upper bridge arm of the second-phase bridge arm are turned on simultaneously.

4. The method according to claim 3, wherein the charger further comprises a bus capacitor, a first bus end of the first-phase bridge arm and the second-phase bridge arm is connected to an end of the bus capacitor, and a second bus end of the first-phase bridge arm and the second-phase bridge arm is connected to another end of the bus capacitor; and
   in a case that the target working mode is the full-bridge mode, before the step of controlling the upper bridge arm and the lower bridge arm of the first-phase bridge arm to turn on complementarily through the first duty cycle, controlling the LLC circuit to work according to the target working mode further comprises:

   obtaining a second voltage of the bus capacitor; and
   if the second voltage is less than a second preset voltage, performing the step of controlling the upper bridge arm and the lower bridge arm of the first-phase bridge arm to turn on complementarily through the first duty cycle, wherein a ratio of the second preset voltage to the first preset voltage is equal to a turn ratio of a transformer in the resonant circuit.

5. The method according to claim 4, wherein controlling the LLC circuit to work according to the target working mode further comprises:
   if the second voltage is greater than or equal to the second preset voltage, controlling the upper bridge arm and the lower bridge arm of the first-phase bridge arm to turn on complementarily through a second duty cycle, and controlling the upper bridge arm and the lower bridge arm of the second-phase bridge arm to turn on complementarily through the second duty cycle, wherein the upper bridge arm of the first-phase bridge arm and the lower bridge arm of the second-phase bridge arm are turned on simultaneously, the lower bridge arm of the first-phase bridge arm and the upper bridge arm of the second-phase bridge arm are turned on simultaneously, and the second duty cycle is less than the first duty cycle.

6. The method according to any one of claims 1 to 5, wherein the charger further comprises a power factor correction circuit and the bus capacitor, wherein the power factor correction circuit is connected to the LLC circuit through the bus capacitor; and
the method further comprises:

obtaining current electricity information of an alternating-current side of the charger and the second voltage of the bus capacitor, wherein the electricity information comprises a current current and a current voltage on the alternating-current side;
determining a steady-state target current on the alternating-current side;
determining a target current value on the alternating-current side according to the current voltage and the steady-state target current; and
controlling, according to the target current value, the current current, the current voltage, and the second voltage, the power factor correction circuit to perform power factor correction.

7. The method according to claim 6, wherein determining the steady-state target current on the alternating-current side comprises:

determining a target charging power on the alternating-current side; and
determining the steady-state target current on the alternating-current side according to the target charging power.

8. A charger control apparatus (5), comprising:

a memory, having a computer program stored therein; and
a controller, the controller, when executing the computer program, implementing the steps of the method according to any one of claims 1 to 7.

9. A charger (100), comprising a power factor correction circuit (2), a bus capacitor (C1), and an LLC circuit (3) that are connected sequentially, and the charger (100) further comprising:
the charger control apparatus (5) according to claim 8, wherein the charger control apparatus (5) is connected to both the power factor correction circuit (2) and the LLC circuit (3).

10. A vehicle, comprising a battery (4) and the charger (100) according to claim 9.

FIG. 1

FIG. 2

Determine a target working mode of an LLC circuit according to a
first voltage of a battery

S301

Control the LLC circuit to work according to the target working mode

S302

## FIG. 3

$- U$bus ——————————————————→ Divider

Feedforward
quantity

$- u_a$ → Phase
locked
loop → $coswt$ → Multiplier → $i_{a\_ref1}$ → (+) → Controller → Feedback
quantity → (+) → Modulation
wave

$I_{a\_ref}$

$- i_a$

Carrier → PWM
generator → PFC
pwm

## FIG. 4

**INTERNATIONAL SEARCH REPORT**

| International application No. |
|---|
| **PCT/CN2023/108248** |

**A. CLASSIFICATION OF SUBJECT MATTER**

B60L53/22(2019.01)i; H02M7/06(2006.01)i; H02M3/335(2006.01)i

According to International Patent Classification (IPC) or to both national classification and IPC

**B. FIELDS SEARCHED**

Minimum documentation searched (classification system followed by classification symbols)

IPC: B60L 53, H02M 7,H02M3

Documentation searched other than minimum documentation to the extent that such documents are included in the fields searched

Electronic data base consulted during the international search (name of data base and, where practicable, search terms used)

CNTXT, DWPI, ENTXT, VEN, WPABS: 充电, 控制, 半桥, 全桥, 切换, 变化, 交替, LLC, PFC, full bridge, half bridge, change, switch, charge, control

**C. DOCUMENTS CONSIDERED TO BE RELEVANT**

| Category* | Citation of document, with indication, where appropriate, of the relevant passages | Relevant to claim No. |
|---|---|---|
| X | CN 108258910 A (ZHEJIANG UNIVERSITY) 06 July 2018 (2018-07-06) see description, paragraph 0021, and figure 1 | 1-3, 8-10 |
| Y | CN 108258910 A (ZHEJIANG UNIVERSITY) 06 July 2018 (2018-07-06) see description, paragraph 0021, and figure 1 | 4-7 |
| Y | KR 101529889 B1 (HAN YANG ELECTRIC CO., LTD.) 18 June 2015 (2015-06-18) description, paragraphs 0009-0017, and figure 3 | 4-7 |
| A | CN 108427050 A (GUANGDONG MIDEA REFRIGERATION EQUIPMENT CO., LTD.) 21 August 2018 (2018-08-21) entire document | 1-10 |
| A | CN 111614267 A (SHENZHEN VMAX NEW ENERGY CO., LTD.) 01 September 2020 (2020-09-01) entire document | 1-10 |
| A | CN 112366760 A (GUANGDONG OPPO MOBILE COMMUNICATIONS CO., LTD.) 12 February 2021 (2021-02-12) | 1-10 |

☑ Further documents are listed in the continuation of Box C.   ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **16 October 2023** | **24 October 2023** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2023/108248**

**C.  DOCUMENTS CONSIDERED TO BE RELEVANT**

| Category* | Citation of document, with indication, where appropriate, of the relevant passages | Relevant to claim No. |
|---|---|---|
| A | US 10050546 B1 (HYUNDAI MOTOR CO., LTD. et al.) 14 August 2018 (2018-08-14) entire document | 1-10 |

Form PCT/ISA/210 (second sheet) (July 2022)

**INTERNATIONAL SEARCH REPORT**
Information on patent family members

International application No.

**PCT/CN2023/108248**

| Patent document cited in search report | | | Publication date (day/month/year) | Patent family member(s) | | | Publication date (day/month/year) |
|---|---|---|---|---|---|---|---|
| CN | 108258910 | A | 06 July 2018 | None | | | |
| KR | 101529889 | B1 | 18 June 2015 | None | | | |
| CN | 108427050 | A | 21 August 2018 | None | | | |
| CN | 111614267 | A | 01 September 2020 | None | | | |
| CN | 112366760 | A | 12 February 2021 | None | | | |
| US | 10050546 | B1 | 14 August 2018 | KR | 20180137056 | A | 27 December 2018 |

Form PCT/ISA/210 (patent family annex) (July 2022)

## REFERENCES CITED IN THE DESCRIPTION

**Patent documents cited in the description**

- CN 202211059072